# EUROPEAN PATENT APPLICATION

(11) **EP 3 410 377 A1**
(43) Date of publication of application: **05.12.2018**
(21) Application number: 17173315.7
(22) Date of filing: 29.05.2017
(51) Int. Cl.: G06Q 20/38, G06Q 20/14, G06Q 20/32, G06Q 20/40

(54) **METHOD FOR SETTING UP A RECURRING PAYMENT**

(71) Applicant: Mastercard International Incorporated, Purchase, New York 10577 (US)
(72) Inventor: WILDES, Emmet, Rathnew, Wicklow (IE)
(74) Representative: Murgitroyd & Company

(57) **Abstract**

The method for setting up a recurring payment comprises, at a cardholder's mobile device (20), receiving (104) from a merchant server a first message (11) comprising an offer requiring a recurring payment. Upon reception of a cardholder's input accepting the offer, an application server (30) in communication with a database (31) storing payment credentials for payment cards from an issuer bank (40) associated with the cardholder is requested (105) to generate a virtual card number, VCN, associated with one of the payment cards and to transmit (107) to the issuer bank (40) VCN data associated with the VCN and indicating the acceptance of the offer. The VCN data are sent (108) to the merchant server with a second message indicating the cardholder's acceptance of the offer. The second message is configured to enable the merchant server, upon reception of the second message, to send the VCN data to the issuer bank (40) for validation of the recurring payment.

## Description

### Technical Field

The present application relates to a method for setting up a recurring payment.

### Background

Utility providers, such as for example land line phone, broadband, gas, water, electricity or other utility providers, provide recurring bills, for example monthly or every two months. It is more and more common for customers to pay their utility provider bills via an automatic payment, such as a direct debit for example, rather than actively paying each bill separately. When a customer signs up with a utility provider, a large amount of paperwork needs be provided, for example, a previous utility bill, personal information, etc. and this is increased if the customer wants to avail of an automatic payment, as the customer also need providing payment details such as their bank account or payment card details.

For utility providers, attracting new customers may be a challenge and one way of getting new customers is having competitor customers switch utility provider. Door to door salespeople from the utility provider may knock on a door of a potential customer, trying to get them to switch utility provider by making a new offer or deal. If the potential customer wants to take up the offer, the potential customer must invite the salesperson into their home and fill out forms providing all the necessary details to set up a new customer account at the utility provider, including, as mentioned above, payment details for setting up a recurring payment if the customers choose an automatic payment method.

Filling out the paperwork can take time, generally between 10-20 minutes, to complete. Hence, the potential customer may be reluctant to take the steps necessary to change provider. Additionally, potential customers may not feel comfortable about letting a salesperson into their home. They may be sceptical of such people calling and may not want to hand over bank details to what they perceive as a stranger at the door. From the utility provider's point of view, they are losing out on potential new customers. Additionally for every new customer they do sign up, the salesperson must go through the manual process of filling out the same paperwork over and over again.

There is therefore a need to provide a fast and yet secure method for setting up a recurring payment, in particular for a utility provider, but indeed any merchant with whom a potential customer wishes to establish a recurring payment.

### Summary

It is an objective of the present teaching to provide a method for setting up a recurring payment from a mobile device that utility providers, such as company providers of phone, broadband, electricity, gas, etc. but also other merchants, may use to try to get customers to accept an offer requiring a recurring payment when utility provider salespeople do their usual door-to-door calls. In particular, if the potential customer has already signed up with a current utility provider, the potential customer may thereby switch utility provider.

Accordingly, the application provides a method for setting up a recurring payment, the method comprising, at a cardholder's mobile device:
receiving a first message from a merchant server, the first message comprising an offer requiring a recurring payment;
upon reception of a cardholder's input accepting the offer contained in the first message, requesting an application server, the application server in communication with a database storing payment credentials for one or more payment cards from an issuer bank associated with the cardholder, to generate a virtual card number, VCN, associated with one of the one or more payment cards of the cardholder and to transmit data associated with the generated VCN to the issuer bank, the data indicating the cardholder's acceptance of the offer;
receiving VCN data associated with the generated VCN; and
sending to the merchant server a second message including the VCN data and indicating the cardholder's acceptance of the offer requiring the recurring payment, the second message configured to enable the merchant server, upon reception of the second message, to send the VCN data to the issuer bank for subsequent validation of the recurring payment.

This method may advantageously obviate the need for a new customer to hand out any payment details to a salesperson at the door, as the customer's payment details are safely and automatically provided to the provider when the customer accept the utility provider's offer. The method may reduce the time the new customer spends on filling out paperwork. The method may also reduce the time a salesperson spends filling out paperwork with a given new customer, therefore allowing more time for discussion or moving on to a next potential customer. The claimed method hence provides a safe and quick way for people to switch providers and take up any new offers of interest from salespeople calling to their homes.

In another aspect there is provided a method for setting up a recurring payment comprising an application server and application server as detailed in the following claims.

Advantages are described in the dependent claims.

These and other features will be better understood with reference to the following drawings which provide the person of skill with an understanding of the present teaching but in no way is intended to limit the present teaching.

### Brief Description Of The Drawings

The present application will now be described with reference to the accompanying drawings in which:
Figure 1 illustrates a system which is an example of the present teaching;
Figure 2 illustrates process steps which are performed by the system of Figure 1 during an exemplary process of the present teaching; and
Figure 3 illustrates a more detailed view of the system of Figure 1.

### Detailed Description Of The Drawings

It will be appreciated that for simplicity and clarity of illustration, where considered appropriate, reference numerals may be repeated among the figures to indicate corresponding or analogous elements.

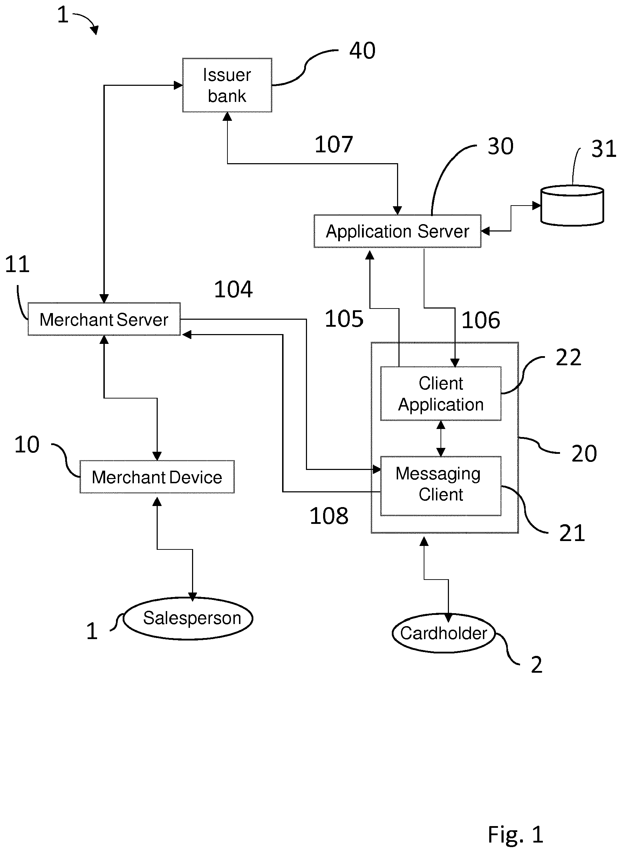

Figure 1 illustrates an exemplary system 1 for implementing the present teaching. A salesperson 1 of a utility provider such as but not limited to a land line phone, broadband, gas, water or electricity provider, may be calling door to door to present potential customers with offers and/or better deals to switch utility providers. It will be understood that although the examples refer to utility providers, other merchants may implement the method for setting up a recurring payment from a customer. Hence, in the following description, the term "merchant" will be also used to refer to a utility provider.

A customer or cardholder 2 may generally have a bank account and at least one payment card issued by one or more banks, also called here "issuer banks". It will be appreciated that the payment card may be issued by any financial institution or entity. For simplicity, reference will be made in the present application to "issuer bank", although it will be understood that the present teaching equally applies to any type of financial institution providing payment cards for customers.

It is understood that the same person may be referred to as a "potential customer" or a "customer" depending on their client relationship with the utility provider. For simplicity, in the following, the term "cardholder" will be used to refer to the potential customer or customer.

The system 1 comprises a cardholder mobile device 20 and an application server 30 in communication with a database 31 storing payment credentials for one or more payment cards from respective issuer banks 40 (only one shown) associated with the payment cards. The system 1 further comprises a merchant server 11 of the utility provider and may comprise a merchant or salesperson mobile device 10 connected with the merchant server 11.

The application server 30 may provide a client application 22 as a service for cardholders to manage their payment cards. The main application may be an electronic or digital wallet service, for example the MasterPass™ service with the present teaching extending the functionality of this service or being provided in parallel with such a service. The client application 22 provides a cardholder that has signed up with the service provided by the application server 30 with secure payment means for payment via the mobile device or an internet interface. Again, the client application 22 may extend the functionality of an existing client such as MasterPass; or can be provided as a standalone client, specifically for establishing recurring payments with merchants.

The cardholder mobile device 20 is signed up to the client application 22 via communication with the application server 30. It will be appreciated that the cardholder may have gone through a personal screening process when connecting to and signing up with the application server and have bank paperwork provided and completed during the phase of signing up. Any personal or bank information submitted by the cardholder to the application server 30 is securely stored in the database 31. A password may for example be requested for accessing the application server 30 via the client application 22.

The application server 30 is further configured to securely communicate with the issuer bank 40. As such, authentication link keys and authentication protocols are known to both application server 30 and issuer bank 40 to establish a secure communication between each other.

It will be understood that, as a prerequisite, utility providers or merchants have signed up with the provider of the application server 30 and client application 22. Preferably the salesperson mobile device 10 may be signed up to a merchant side client application 22 in communication with the merchant server 11; while the cardholder mobile device 20 may be signed up to a customer client application 22 in communication with the application server 30. The merchant side client application may be provided to the merchant by the provider of the application server 30 for managing their customer accounts. The merchant side client application and customer client application 22 can be separate dedicated applications; or they can be the same application arranged to present different options or graphical user interfaces according to whether the client application is directed to a merchant salesperson or a customer.

The cardholder mobile device 20 may further be signed up to a utility sub-application of the client application 22, preferably a utility sub-application of the customer version of the client application. The utility sub-application of the client application 22 may be provided by the application server 30 for cardholders to manage their own utility provider accounts and possibly make payments to their current utility providers. As will be clear from the below, when a salesperson 1 submits an offer requiring a recurring payment to a cardholder 2, the cardholder mobile device 20 may have the utility sub-application previously installed or the sub-application may be downloaded when the cardholder accepts the offer.

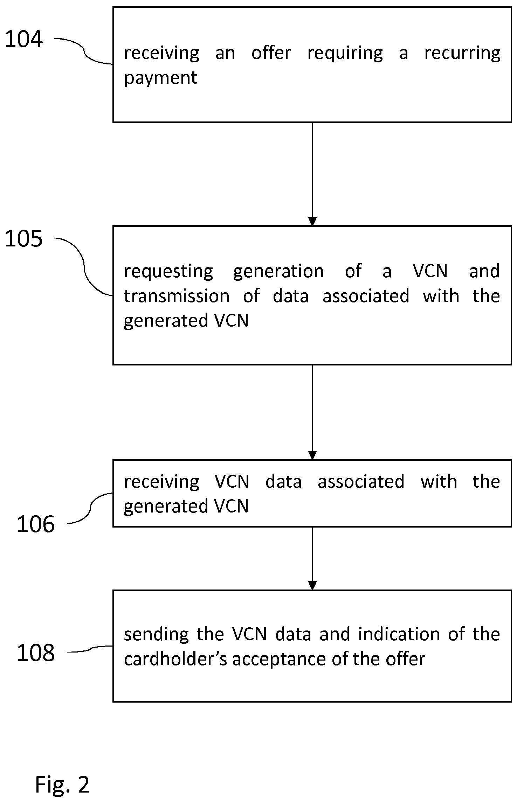

The method for setting up a recurring payment according to the present teaching will now be described in relation to Figure 2.

The cardholder's mobile device 20 receives at step 104 a first message from a merchant server 11, the first message comprising an offer requiring a recurring payment.

Upon reception of a cardholder's input accepting the offer contained in the first message, the cardholder's mobile device 20 requests at step 105, the application server 30 to generate a virtual card number, VCN, associated with one of the payment cards of the cardholder and to transmit, at step 107, data associated with the generated VCN to the issuer bank 40, the data indicating the cardholder's acceptance of the offer.

The cardholder's mobile device 20 receives at step 106, VCN data associated with the generated VCN.

The cardholder's mobile device 20 sends at step 108 to the merchant server 11 a second message including the VCN data and indicating the cardholder's acceptance of the offer requiring the recurring payment. The second message is advantageously configured to enable the merchant server 11, upon reception of the second message, to send the VCN data to the issuer bank 40 for subsequent validation of the recurring payment.

Advantageously with the present teaching, since the cardholder is verified by having an account on the application server 30, there is no need for the cardholder to provide bank details, proof of address, etc. directly to the salesperson thereby cutting out all paperwork.

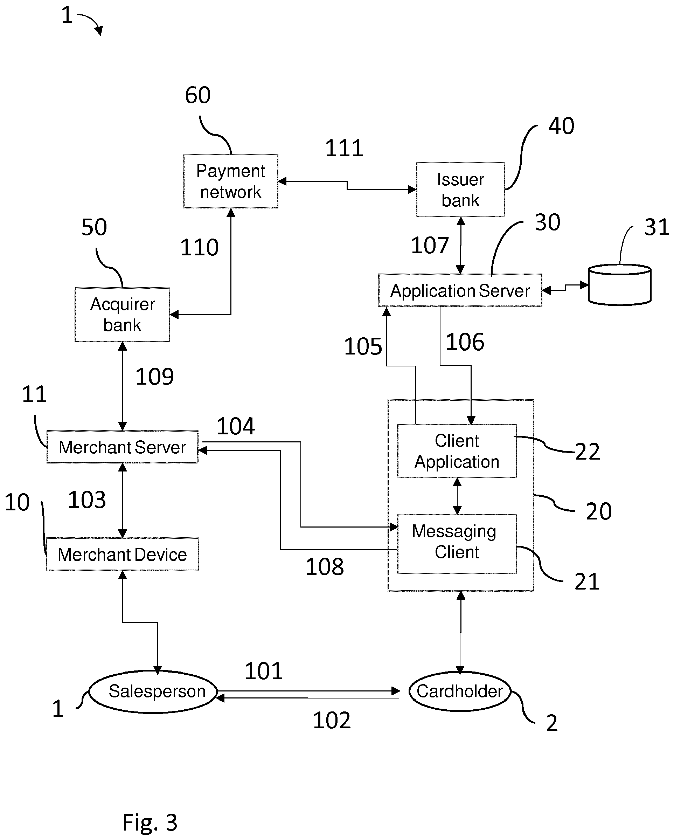

A method for setting up a recurring payment according to the present teaching will now be described in more detail with respect to the example illustrated in Figure 3.

First, a salesperson 1 makes an offer requiring a recurring payment to a cardholder 2 at step 101. Typically, this is done by the salesperson explaining the offer orally to the cardholder in conjunction with tools available on their device 10, for example, spreadsheets or charts demonstrating savings the cardholder may gain from using or switching to the salesperson merchant.

If the cardholder 2 is interested in the offer from the salesperson and intends to accept the offer, the cardholder may, at step 102, give orally or otherwise send to the salesperson 1 their contact details, such as a contact number or an email address. For example, the cardholder may send an electronic message, such as an email or a SMS, to the salesperson mobile device 10.

The salesperson 1, using the merchant side client application on the mobile device 10, may contact the merchant server 11 and provide the cardholder contact details at step 103.

Subsequently the merchant server 11 sends to the cardholder's mobile device 20 a first message containing the offer at step 104. The offer may be sent for example by email or text message such as Short Message Service "SMS". The first message may be received at a messaging client 21 of the cardholder mobile device 20 in communication with the client application 22. The offer may comprise a charge rate, a contract duration, a contract description, a reference to Terms and Conditions or any other legal requirement, all or part of which may be included in the first message.

The first message containing the offer may also comprise merchant details. For example the first message may comprise a merchant identifier, such as a merchant name or other information identifying the merchant. The first message may also comprise the type of service the merchant is offering, e.g. the type of utility service the merchant provides. The first message may also comprise merchant bank account details.

The first message may also contain a user selectable element for receiving a user input selection expressing the acceptance of the offer. For example, the first message may comprise a link (URL), a button, a box to be ticked or any other suitable user selectable element that the cardholder 2 may select if the cardholder 2 wishes to accept the offer. Upon reception of the first message, the cardholder 2 is hence prompted to select the user selectable element. If the cardholder 2 agrees with the Terms and Conditions of the offer, the cardholder 2 expresses his acceptance of the offer by selecting the user selectable element.

In an aspect, upon user selection of the user selectable element within the message rendered by the messaging client 21, the client application 22, preferably the customer version thereof, opens on the cardholder mobile device 20 and the process continues with step 105.

However, if the client application 22 is not installed on the cardholder mobile device 20, the cardholder 2 may be presented with an option contained within the first message (again in the form of a link or button or other user selectable element) to download the client application 22, for example from a dedicated website or an application store, before continuing the process.

Once the client application 22 is downloaded and installed on the cardholder mobile device 20, the cardholder 2 may be prompted to log in to an existing account of the cardholder on the application server 30.

The cardholder 2 may need to create an account on the application server 30 if necessary. The salesperson 1 may also suggest the cardholder 2 to register to the application server 30 prior to downloading the client application 22.

For creating an account on the application server 30, the cardholder 2 may access the application server 30, for example though a website of the application server 30 or an application store on the cardholder mobile device 20. When creating an account on the application server 30, the cardholder may go through Know Your Customer, KYC, requirements, that is a process of the application server 30 identifying and verifying the identity of its customer, and becomes a verified account user of the application server 30. When the cardholder 2 setups an account on the application server 30, the cardholder 2 may thus provide the application server 30 with personal information, bank account details, Debit/Credit cards details, etc. The account may also comprise at least a cardholder identifier and be protected with a password and/or any other suitable security element including biometrics etc.

The cardholder 2 may already have an account at another current utility provider and may also have the client application 22 set up with the current utility provider. Hence, when the cardholder mobile device 20 accesses the client application 22 to switch utility provider, details of the current utility provider and their current offer, may be presented by the client application 22. For example, details related to the current offer may comprise the merchant name, the type of service the merchant is offering, e.g. the type of utility service the merchant provides, the charge rate, contract duration, the contract, a reference to Terms and Conditions and any other legal requirement provided by the current utility provider. The current offer may also comprise the current address related to the utility including, if appropriate, legal address indication, such as floor, apartment number, etc. The current address may be the cardholder home, work or holiday address or another address of the cardholder.

When the cardholder mobile device 20 has launched the client application 22, a request may be sent to the application server 30 for user verification and for example the application server 30 may request a password and/or other required authentication from the cardholder for accessing the application server 30.

It is understood that the cardholder 2 has accepted the offer by selecting the user selectable element of the first message. The acceptance of the offer may be confirmed once the client application 22 is opened on the cardholder mobile device 20. For example, the cardholder 2 may confirm their acceptance of the offer by providing a further user input such as selecting another user selectable element presented in the client application 22.

Upon reception of the cardholder's input accepting the offer, and possibly the confirmation, the client application 22 requests at step 105 the application server 30 to generate a virtual card number, VCN, associated with one of the one or more payment cards of the cardholder. The request may be an API request sent to the application server 30 by the client application 22. Typically such a request is sent using a secure dedicated connection between the client application 22 and the application server 30.

The client application 22 also requests at step 105 the application server 30 to transmit at step 107 data associated with the generated VCN to the issuer bank 40, the data indicating the cardholder's acceptance of the offer.

Preferably, at step 105, the client application 22 also transmits the merchant details, such as for example the merchant identifier or the merchant bank account details or both, to the application server 30 jointly with the request so as to latch merchant details to the VCN.

Optionally, before the cardholder accepts the offer as described above, the client application 22 may prompt the cardholder for a selection of which of the one or more payment cards stored in the database 31 the cardholder wishes to associate with the VCN and use for the recurring payment.

A VCN typically comprises, similarly to a physical payment card, at least three elements: a payment card number, an expiry date, a card verification code, CVC, and a date of expiration. Generally, the payment card number consists of sixteen digits, as for a physical payment card.

Options for the VCN may be added to these three elements of the VCN, such as a time usage restriction, a maximum transaction limit or maximum recurrence limit. For example, the utility provider may require a monthly payment and therefore a usage of the VCN may be restricted to a maximum recurrence limit of once a month. The VCN usage may also be limited in time, preferably according to the term of the contract. For example the VCN may be have a maximum duration of 12 months corresponding to a 12 month utility provider contract term. The VCN may also have a limited maximum transaction limit or maximum chargeable amount per month. The client application 22 may thus specify VCN options to match the utility contract and forward the selected VCN options to the application server 30 at step 105. By providing the VCN options to the application server 30 at step 105, the present method allows the application server 30 to generate a VCN that follows the utility provider contract. It also ensures that the VCN may not be used for usage other than the original, thereby providing enhanced security to the cardholder.

It will be understood that the client application 22 may prompt the cardholder for personal details such as full name and address, either before or when the client has accepted the contract. Such details may also be provided by the application server 30 to the client application 22. If the cardholder already has an account at another utility provider, such personal details may already be stored either locally or in the database 31.

Upon reception of the request for generating a VCN, the application server 30 generates a VCN and associates or links the VCN with the payment card, possibly as selected by the cardholder. It will be appreciated that the generated VCN is also associated with the cardholder user account at the application server 30.

It will be understood that the VCN reflects a real card number, RCN, of the cardholder payment card associated with the VCN based upon a mapping service provided by a virtual card mapping service of the application server 30, where the RCN is typically printed on the cardholder's physical payment card. A VCN is issued with the possibility of the cardholder 2 deactivating it immediately without impacting the underlying payment card.

Preferably, the merchant details, for example the merchant identifier or the merchant bank details or both, are also associated or linked to the VCN at the application server 30. Associating merchant details to the generated VCN allows the usage of the VCN to further be restricted as payment authorisation may be allowed by the issuer bank solely for the merchant linked with the VCN.

It will be understood that the generated VCN and the associated merchant details are stored in the database 31 in relation with the associated payment card.

Once the VCN is generated by the application server 30, the application server 30 sends at step 106 first VCN data associated with the generated VCN for reception by the client application 22 of the cardholder mobile device 20. At the cardholder mobile device 20, the first VCN data may be stored and accessible by the client application 22. For enhanced security, the first VCN may be stored only in the database 31 and not at the cardholder mobile device 20.

The application server 30 further sends at step 107 second VCN data associated with the generated VCN and indicating the cardholder's acceptance of the offer, for reception by the issuer bank 40. The application server 30 may use a secure path to communication with the issuer bank 40. The second VCN data may be sent via an API update message sent to the issuer bank 40 by the application server 30. The second VCN data may be sent to the issuer bank 40 with an indication of the cardholder's payment card associated with the VCN, possibly as selected by the cardholder, so that the issuer bank 40 may associate the VCN with a cardholder payment card. Alternatively, the issuer bank 40 may store a virtual card mapping data in its database. In these cases, the issuer bank 40 may be able to convert a VCN for a cardholder to an RCN immediately.

The second VCN data may be stored at the issuer bank 40 in a first VCN table where the second VCN is linked to the RCN of the cardholder payment card associated with the VCN.

Preferably, merchant details are also sent to the issuer bank 40 together with the second VCN data by the application server 30. The merchant details may be stored at the issuer bank 40 in a second VCN table where the merchant details are linked to the VCN. It will be appreciated that the first and second VCN tables may be grouped in a single VCN table.

Upon reception of the first VCN data associated with the generated VCN at the cardholder mobile device 20, the client application 22 (possibly via messaging client 21) sends, at step 108, a second message to the merchant server 11, including the first VCN data and indicating the cardholder's acceptance of the offer requiring the recurring payment. The second message is advantageously configured to enable the merchant server 11, upon reception of the second message, to send the first VCN data to the issuer bank 40 for subsequent validation of the recurring payment.

A notification may be sent back from client application (again possibly via the messaging client 21) to the salesperson mobile device 10 to inform the salesperson of the acceptance of the offer. This allows the salesperson to move to another potential customer.

It will be understood that the acceptance of the offer by the cardholder may cause the sequence of steps of the present method, comprising the cardholder mobile device 20 sending the VCN request at step 105; the application server 30 generating the VCN and sending the VCN to the cardholder mobile device 20 and the issuer bank 40; and the cardholder mobile device 20 sending the second message automatically upon receipt of the VCN at step 108.

In an aspect, as the cardholder has selected the user selectable element of the first message to indicate their intent to accept the utility provider offer, the client application 22 may guide the cardholder in the subsequent steps to confirm and send the acceptance of the offer. A series of GUIs of the client application 22 may guide the cardholder step-by-step to accomplish the confirmation process. A first step may comprise reviewing details of the offer, comprising the merchant and contract details. The first step may include the other user selectable element enabling confirmation of the acceptance. A second step may comprise reviewing cardholder personal details, such as name and address. A third step may comprise reviewing cardholder bank details and include selecting the payment card. The third step may include sending the VCN request to the application server 30 and upon reception of the VCN, automatically sending the second message containing the offer acceptance to the merchant server 11.

Alternatively, a fourth step may comprise, after reception of the VCN, finalising the acceptance process. The fourth step may comprise a button or other suitable user actionable element that the cardholder may action to send the second message containing the offer acceptance to the merchant server 11.

Once the merchant server 11 has received the second message, the merchant server 11 may use the second VCN data to charge a bill to the cardholder payment card. The merchant server 11 may store the second VCN data so as to regularly charge bills as planned in the offer accepted by the cardholder. For example, the merchant server 11 may perform a monthly transaction. In this example, as set in the VCN options, the VCN may be restricted to a monthly usage which prevents the merchant server 11 from making any other transaction than the planned monthly bill.

For making a transaction, the merchant server 11 may, directly or indirectly, communicate with the issuer bank 40. The communication with the issuer 40 may be made according to a conventional transaction process. For example, the merchant server 11 may run a batch program of transactions, a single request to the issuer bank 40, use a terminal for making an online payment request or generally send a payment request.

With payment request, the merchant server 11 may provide the second VCN data to the issuer bank 40. The issuer bank 40 may thus compare the second VCN data with the first VCN data stored at the issuer bank 40. If the first and second VCN data match, the issuer bank 40 validates the payment. If however the VCN data do not match, the transaction is declined and a recurring payment is not set up, authorised or executed.

Preferably, for enhanced security, the merchant details are sent to and stored at the issuer bank 40 as described above. The merchant server 11 may also provide, directly or indirectly, merchant details, to the issuer bank 40 so that the issuer bank 40 may additionally compare the stored and received merchant details. In this case the issuer bank 40 validates the payment if the stored and received merchant details match. It will be understood that if however either one of the VCN data and the merchant details does not match, the transaction will be declined and no recurring payment is set up, authorised or executed. Hence providing the merchant details enhances security and ensures that the VCN can only be used for its intended use.

As will be seen from Figure 3, in an aspect, the merchant server 11 may provide payment details, such as a chargeable amount, with the second VCN data to an acquirer bank 50 of the merchant at step 109. The acquirer bank 50 may be in communication with a payment network 60 for facilitating the payment. The issuer bank 40 may also be in communication with the payment network 60. On request of the merchant server 11, the acquirer bank may transfer the payment details to the payment network at step 110. The payment network may communicate with the issuer bank 40 and provide the payment details to the issuer bank 40 at step 111. On receipt of the payment details including the second VCN data, the issuer bank 40 may validate the payment upon matching of the first and second VCN data, and optionally the merchant details. The issuer bank 40 may access the VCN tables to recover the RCN of the payment card associated with the VCN and carry out the payment.

As a further security, the merchant server 11 may perform a pre-authorisation process so as to verify that the payment details given by the cardholder are correct. A pre-authorisation process comprises sending a payment request as described above to the issuer bank 40 but with a negligible amount of money which is not be recovered. If the first and second VCN data, and possibly the merchant details, match at the issuer bank 40, the pre-authorisation is successful and the issuer bank 40 may update the VCN tables indicating that recurring payment is authorised. The issuer bank 40 may inform the merchant server 11 that the recurring payment is authorised.

The issuer bank, on receipt of the pre-authorisation payment request, may send an automated message or make a courtesy call to the cardholder to confirm the recurring payment. If the cardholder confirms, the pre-authorisation is successful and the issuer bank 40 may update the VCN tables indicating that the recurring payment is authorised.

It will be understood that the above described comparison of the first and second VCN data, and possibly the merchant details, is nevertheless required to validate each payment subsequent to the pre-authorisation.

Upon reception of the second message, the merchant server 11 may update its customer list to include the cardholder as a new client.

A notification may be sent to the cardholder, for example directly via the client application 22 or by the messaging client 21, that the potential customer has switched utility provider and when their first payment will be taken out. Such a notification may be sent for example when the cardholder 2 has accepted the offer, when the cardholder 2 has confirmed the acceptance of the offer or when the pre-authorisation has been validated by the issuer bank 40.

It will be appreciated that, depending on the legislation of the jurisdiction, the potential customer may still have a statutory right of retraction, for example a 14 days period, to change their mind and back out of the offer if they choose too. The customer version of the client application 22 may propose an option for retracting their acceptance of the offer.

A 'refer a friend policy' may be in place in the client application 22 allowing the cardholder to send a notification onto their friends, family, neighbours of the new offer they have taken up. Such a notification may be a push notification sent to email addresses or phone numbers of an address book of the cardholder mobile device 20. The cardholder may get a reward for a referring a friend from the utility provider.

A notification, for example a push notification, may be sent from the client application 22 at the cardholder mobile device 20 to the cardholder current utility provider to inform the current utility provider that the cardholder has accepted a new offer from a competitor. The current utility provider may thus have an opportunity to try and keep the cardholder as a customer by matching or offering a better deal than the accepted offer. In this case, the cardholder may cancel the contract with the new utility provider.

While certain examples of the teaching have been described, these examples have been presented by way of example only, and are not intended to limit the scope of the disclosure. Indeed, the method and system described herein may be embodied in a variety of other forms. Furthermore, various omissions, substitutions and changes in the form of the method and system described herein may be made.

The words comprises/comprising when used in this specification are to specify the presence of stated features, integers, steps or components but does not preclude the presence or addition of one or more other features, integers , steps, components or groups thereof.

## Claims

1. A method for setting up a recurring payment, the method comprising, at a cardholder's mobile device (20):
receiving (104) a first message from a merchant server (11), the first message comprising an offer requiring a recurring payment;
upon reception of a cardholder's input accepting the offer contained in the first message, requesting (105) an application server (30), the application server in communication with a database (31) storing payment credentials for one or more payment cards from an issuer bank associated with the cardholder, to generate a virtual card number, VCN, associated with one of the one or more payment cards of the cardholder and to transmit (107) data associated with the generated VCN to the issuer bank, the data indicating the cardholder's acceptance of the offer;
receiving (106) VCN data associated with the generated VCN; and
sending (108) to the merchant server a second message including the VCN data and indicating the cardholder's acceptance of the offer requiring the recurring payment, the second message configured to enable the merchant server, upon reception of the second message, to send the VCN data to the issuer bank for subsequent validation of the recurring payment.

2. The method of claim 1 wherein
the VCN comprises at least one of: a payment card number, an expiry date, a card verification code, CVC, a time usage restriction, a maximum transaction limit and maximum recurrence limit.

3. The method of claim 1 or 2 wherein the first message further comprises at least one of: a merchant identifier and merchant bank account details; the method further comprising:
transmitting the at least one of the merchant identifier and merchant bank account details to the application server jointly with the requesting (105); and
wherein the second message is further configured to cause the merchant server, upon reception of the second message, to send the at least one of a merchant identifier and merchant bank account details to the issuer bank.

4. The method of any one of the claims 1 to 3 wherein the merchant is a utility provider.

5. The method of any one of the claims 1 to 4, further comprising providing (102) contact details to a merchant mobile device (10) in communication with the merchant server (11) for communication of the contact details from the merchant mobile device (10) to the merchant server (11).

6. The method of any one of the claims 1 to 5, further comprising prompting the cardholder for a selection of which of the one or more payment cards stored in the database (31) to associate with the VCN.

7. The method of any one of the claims 1 to 5, further comprising receiving a user input selection confirming the acceptance of the offer.

8. A cardholder's mobile device (20), comprising a messaging client (21) and an application (22) configured to carry out the steps of the method of any one of the claims 1 to 7.

9. A method for setting up a recurring payment, the method comprising an application server (30), in communication with a database (31) storing payment credentials for one or more payment cards from an issuer bank associated with a cardholder, performing the steps of:
receiving (105), from a cardholder's mobile device (20), a request for generating a virtual card number, VCN, associated with one of the one or more payment cards of the cardholder, the request indicating a cardholder's acceptance of an offer requiring a recurring payment;
generating the VCN;
sending first VCN data associated with the generated VCN to the cardholder's mobile device (20) for subsequent transmission to a merchant server (11); and
transmitting second VCN data associated with the generated VCN to the issuer bank (40) indicating the cardholder's acceptance of the offer requiring a recurring payment.

10. The method of claim 7, wherein
the VCN comprises at least one of: a payment card number, an expiry date, a card verification code, CVC, a time usage restriction, a maximum transaction limit and maximum recurrence limit.

11. The method of claim 7 or 8, wherein the request further comprises at least one of: a merchant identifier and merchant bank account details; and the method further comprising:
transmitting the at least one of a merchant identifier and merchant bank account details with the second VCN data associated with the generated VCN to the issuer bank (40).

12. The method of any one of claims 7 to 9, wherein the merchant is a utility provider.

13. An application server (30) in communication with a database (31) storing payment credentials for one or more payment cards from an issuer bank (40) associated with a cardholder, the application server (30) configured to carry out the steps of the method of any one of the claims 9 to 12.
